# EUROPEAN PATENT APPLICATION

(11) **EP 4 292 443 A1**
(43) Date of publication of application: **20.12.2023**
(21) Application number: 22752804.9
(22) Date of filing: 10.02.2022
(51) Int. Cl.: A23L 7/109

(54) **GROOVED NOODLES**

(30) Priority: 15.02.2021 JP 2021021525
(71) Applicant: Nisshin Seifun Welna Inc., Tokyo 101-8441 (JP)
(72) Inventor: KIMURA Ryusuke, Fujimino-city, Saitama 356-8511 (JP); YAMAJI Kazuaki, Fujimino-city, Saitama 356-8511 (JP); FUJII Tomoyuki, Fujimino-city, Saitama 356-8511 (JP)
(74) Representative: Casalonga
(86) International application number: PCT/JP2022/005317
(87) International publication number: WO 2022/172982

(57) **Abstract**

In a cross section of the noodle string, each of the plurality of grooves has a cross sectional shape extending from a surface of the noodle string toward a center portion of the noodle string in a radial direction with a width being constant or gradually decreasing, the plurality of grooves include a first groove having a width of 0.3 to 0.5 mm of an opening portion at the surface of the noodle string and a depth of 0.3 to 0.6 mm in the radial direction and a second groove having a width of 0.15 to 0.35 mm of an opening portion at the surface of the noodle string and a depth of 0.03 to 0.05 mm in the radial direction, and a cross sectional shape of the first groove has a pair of side portions facing each other and linearly extending, and a pair of curving portions each having a radius of curvature of 0.08 to 0.16 mm and connecting end portions of the pair of side portions on a noodle string surface side to the surface of the noodle string.

## Description

### TECHNICAL FIELD

The present invention relates to a grooved noodle and particularly to a grooved noodle having a plurality of grooves formed along a noodle string direction.

### BACKGROUND ART

Conventionally, there have been proposed noodles having grooves formed along a noodle string direction for the purpose of achieving reduction in a cooking (boiling) time when noodles are put in boiling water to obtain boiled noodles. For instance, Patent Literatures 1 to 4 describe grooved noodles with various groove shapes that can be cooked in a short time compared to noodles having no grooves and exhibit equivalent texture to that of noodles having no grooves after being cooked. In addition, Patent Literature 5 describes grooved noodles having grooves with fine depth for the purpose of preventing a flaw in grooved noodles that is generated in the process of producing noodles by extrusion through a die.

### CITATION LIST

### PATENT LITERATURE

Patent Literature 1: WO 2008/090802
Patent Literature 2: JP 2001-17104 A
Patent Literature 3: JP 2011-4701 A
Patent Literature 4: JP 2012-115173 A
Patent Literature 5: JP 2007-89564 A

### SUMMARY OF INVENTION

### TECHNICAL PROBLEMS

Patent Literatures 1 to 4 disclose grooved noodles whose surface areas are enlarged so that they can be cooked in a short time and which exhibit an appearance and texture equivalent to those of noodles having no grooves after being cooked. In addition, Patent Literature 5 discloses grooved noodles which are excellent in handleability and exhibit an appearance and texture equivalent to those of noodles having no grooves after being cooked, and to which sauce adheres well.

However, Patent Literatures 1 to 5 are silent as to providing a grooved noodle in which grooves remain even after being cooked, thereby improving adhesion of sauce to the noodle while the noodle has grooves of shape capable of reducing a cooking time by creating an ingenious groove shape.

Accordingly, the present invention aims at providing a grooved noodle that can be cooked in a short time and that has excellent sauce adhesion property.

### SOLUTION TO PROBLEMS

The present inventors have made intensive studies and found that the above object can be attained by the following constitution.

The grooved noodle according to the present invention is a grooved noodle having a plurality of grooves formed along a noodle string direction,
wherein a cross section of a noodle string has a configuration of circular shape or polygonal shape having an area of 1 to 4 mm²,
each of the plurality of grooves has a cross sectional shape extending from a surface of the noodle string toward a center portion of the noodle string in a radial direction with a width being constant or gradually decreasing in a cross section of the noodle string,
the plurality of grooves include a first groove having a width of 0.3 to 0.5 mm of an opening portion at the surface of the noodle string and a depth of 0.3 to 0.5 mm in the radial direction and a second groove having a width of 0.15 to 0.35 mm of an opening portion at the surface of the noodle string and a depth of 0.03 to 0.05 mm in the radial direction in a cross section of the noodle string, and
a cross sectional shape of the first groove in a cross section of the noodle string has a pair of side portions facing each other and linearly extending, and a pair of curving portions each having a radius of curvature of 0.08 to 0.15 mm and connecting end portions of the pair of side portions on a noodle string surface side to the surface of the noodle string.

Preferably, a value of a total area of the plurality of grooves in a cross section of the noodle string is 10 to 30% of an area of the configuration when it is assumed that the plurality of grooves are not formed.

Preferably, the plurality of grooves include three to five first grooves each being the first groove.

Preferably, the first groove and the second groove are alternately arranged along a circumferential direction of the noodle string.

### ADVANTAGEOUS EFFECTS OF INVENTION

The invention provides a grooved noodle that can be cooked in a short time, and that has a groove remaining even after being cooked, thereby achieving excellent sauce adhesion property compared to conventional noodles having no grooves.

### BRIEF DESCRIPTION OF DRAWINGS

[FIG. 1] FIG. 1 is a perspective view illustrating part of a grooved noodle according to an embodiment of the invention.
[FIG. 2] FIG. 2 is a cross sectional view illustrating the grooved noodle according to the embodiment.
[FIG. 3] FIG. 3 is a partial enlarged view of FIG. 2.

### DESCRIPTION OF EMBODIMENTS

The present invention is described in detail below.

The description of the constituent elements below is made based on a representative embodiment of the invention, but the present invention is not limited to such an embodiment.

In the present description, a numerical range indicated by using "to" mean a range including numerical values described before and after "to" as its lower limit value and upper limit value.

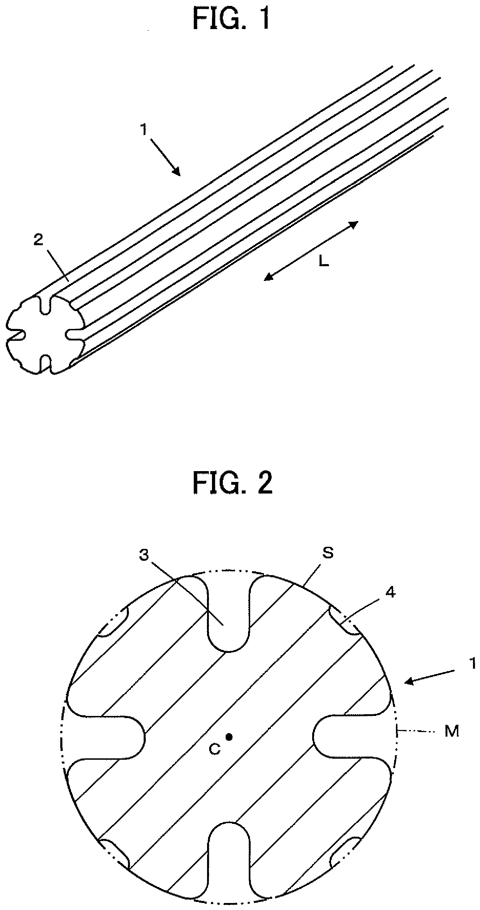

FIG. 1 illustrates a grooved noodle 1 according to an embodiment of the invention. The grooved noodle 1 is composed of a dry noodle extending in a noodle string direction indicated by L in the drawing. The noodle string is provided at its outer periphery with a plurality of grooves 2 formed along the noodle string direction L.

The grooved noodle 1 is typically produced by extruding a dough made of raw material powder containing wheat flour through a through hole of a die to form the dough into a noodle string shape. According to this forming method, since a noodle string of shape corresponding to a shape of the through hole of the die is continuously extruded, it is possible to efficiently produce the grooved noodle 1 having the grooves 2 formed along the noodle string direction L by setting the shape of the through hole such that a desired cross sectional shape is obtained.

As illustrated in FIG. 2, the noodle string has a substantially circular configuration M in its cross section perpendicular to the noodle string direction L. Thus, when it is assumed that the grooves 2 are not formed, the grooved noodle 1 would have a substantially circular cross sectional shape along the configuration M. The noodle string is formed to have a solid interior.

The grooves 2 formed in the outer periphery of the noodle string each extend along a radial direction from a surface S of the noodle string toward a center portion C of the noodle string, and include two types of grooves having different depths, i.e., a relatively deep first groove 3 and a relatively shallow second groove 4. Four first grooves 3 and four second grooves 4 are alternately arranged along a circumferential direction of the outer periphery of the noodle string. The four first grooves 3 are arranged along the circumferential direction of the outer periphery of the noodle 1 at regular intervals, and the second grooves 4 are each situated at a middle part between two adjacent first grooves 3.

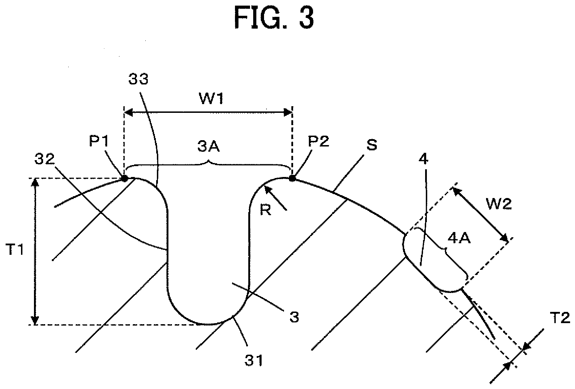

As illustrated in FIG. 3, in a cross section of the noodle string, the first groove 3 has a depth T1 along the radial direction, and the cross sectional shape of the first groove 3 includes a bottom portion 31 situated at the deepest part, a pair of side portions 32 separately connected to opposite ends of the bottom portion 31 and linearly extending while facing each other, and a pair of curving portions 33 each connecting an end of a side portion 32 and the surface S of the noodle string.

The pair of side portions 32 each extend from an end of the bottom portion 31 along the radial direction toward the surface S of the noodle string, and the pair of curving portions 33 are separately connected to ends, closer to the surface S of the noodle string, of the side portions 32.

Each curving portion 33 is composed of an arc having a radius of curvature R, and to an end of the curving portion 33, the corresponding side portion 32 is connected so as to extend in a tangential direction of the curving portion 33. To the other end of the curving portion 33, the surface S of the noodle string constituting part of the configuration M is connected such that the surface S and the curving portion 33 share the same tangent.

Between connection points P1 and P2 at which the surface S of the noodle string and the pair of curving portions 33 are connected, an opening portion 3A of the first groove 3 is formed to have a width W1.

On the other hand, the second groove 4 has a cross sectional shape as with a shallow dent formed in the surface S of the noodle string. Specifically, the second groove 4 has a depth T2 with a dimension as small as about one tenths of the depth T1 of the first groove 3, and a width W2 of an opening portion 4A along the surface S of the noodle string is designed to be larger than the depth T2 along the radial direction.

In a cross section of the noodle string perpendicular to the noodle string direction L, when it is assumed that the grooves 2 are not formed, the configuration M of the grooved noodle 1 has a substantially circular shape, but may take on a polygonal shape. The polygonal shape is preferably any of a quadrilateral shape to a dodecagonal shape, and more preferably any of a hexagonal shape to a decagonal shape.

In a cross section of the noodle string, such a circular or polygonal configuration M has an area of 1 to 4 mm². In addition, a total area of the grooves 2 is preferably 10 to 30% of the area of the configuration M.

The depth T1 of the first groove 3 is defined to fall within a range of 0.3 to 0.6 mm, preferably 0.4 to 0.55 mm. The width W1 of the opening portion 3A of the first groove 3 is defined to fall within a range of 0.3 to 0.5 mm, preferably 0.35 to 0.45 mm. With the depth T1 and the width W1 deviating from the foregoing ranges, no recessed portion is likely to be formed after the first grooves 3 are closed as the grooved noodle 1 is boiled. As a result, the cooked noodle has inferior texture and degraded sauce adhesion property.

In addition, a distance between the pair of side portions 32 of the first groove 3 is constant along the radial direction but may be designed to gradually decrease from their ends on the opening portion 3A side toward the bottom portion 31. If, assumingly, the distance between the pair of side portions 32 gradually increases toward the bottom portion 31, the first groove 3 would be closed earlier in the vicinity of its end on the opening portion 3A side than at the bottom portion 31 when the grooved noodle 1 is cooked, and hence an empty portion would be formed inside the noodle string of the grooved noodle 1 having been cooked, leading to watery taste due to water used for cooking and remaining in the empty portion, and insufficient firmness in texture due to positional shifts of facing wall portions of the closed groove.

The radius of curvature R of the curving portion 33 connecting the side portions 32 of the first groove 3 and the surface S of the noodle string is defined to fall within a range of 0.08 to 0.16 mm, preferably 0.09 to 0.14 mm. With the radius of curvature R of the curving portion 33 and the distance between the pair of side portions 32 being constant or gradually decreasing toward the bottom portion 31 along the radial direction as described above, not the first groove 3 is entirely closed but a minute first recessed portion can be formed as a trace of the first groove 3 after the grooved noodle 1 is cooked. Owing to the cross sectional shape of the first groove 3, the minute first recessed portion formed after cooking takes on a recess shape having its center being angulated.

An angle θ formed by the pair of side portions 32 of the first groove 3 toward the opening portion 3A is designed to be 0 to 10 degrees, preferably 1 to 8 degrees. With the angle θ between the pair of side portions 32 being 0 degrees or opening toward the opening portion 3A as described above, time to closure of the first groove 3 is ensured, and the minute first recessed portion is securely formed after the grooved noodle 1 is cooked. If, assumingly, the angle θ between the pair of side portions 32 exceeds 15 degrees, the first groove 3 would be so rapidly closed that the effect of reduction in cooking time would hardly be achieved, and the first recessed portion as a trace of the first groove 3 would hardly be formed. On the other hand, if the angle θ between the pair of side portions 32 is negative, i.e., if the distance between the pair of side portions 32 gradually increases toward the bottom portion 31, the first groove 3 is closed earlier on the opening portion 3A side than at the bottom portion 31, so that an empty portion would remain inside the noodle, and the first recessed portion would hardly be formed as a trace of the first groove 3.

The depth T2 of the second groove 4 is defined to fall within a range of 0.03 to 0.05 mm, preferably 0.035 to 0.045 mm. The width W2 of the opening portion 4A of the second groove 4 is defined to fall within a range of 0.15 to 0.35 mm, preferably 0.2 to 0.3 mm. With the depth T2 and the width W2 of the second groove 4 being defined to have such dimensions as described above, the second groove 4 is not closed and remains as a minute second recessed portion after the grooved noodle 1 is cooked. The second recessed portion takes on a recess shape having a gentle curve, differently from the first recessed portion formed as a trace of the first groove 3.

Since having the first grooves 3 and the second grooves 4 as described above, the grooved noodle 1 of the embodiment illustrated in FIGS. 1 and 2 turns to a cooked noodle not in a shape similar to conventional noodles having no grooves but a shape in which four minute first recessed portions corresponding to four first grooves 3 and four minute second recessed portions corresponding to four second grooves 4 extend along the noodle string direction after being cooked. Since the first recessed portion of recess shape having its center being angulated and the second recessed portion of recess shape having a gentle curve are formed, sauce entirely and evenly adheres to the cooked noodle in such a manner that sauce hardly drips off; the grooved noodle can exhibit taste with improved harmony with sauce, compared to conventional noodles having no grooves and conventional grooved noodles in which grooves are fully closed.

In the grooved noodle 1 of the embodiment illustrated in FIGS. 1 and 2, four first grooves 3 and four second grooves 4 are alternately arranged along the circumferential direction of the outer periphery of the noodle string, but this is not the sole case, and three to five first grooves 3 and three to fifteen second grooves 4 are preferably arranged. When the total number of the grooves 2 including the first grooves 3 and the second grooves 4 is four to sixteen, preferably eight to twelve, it is possible to obtain a noodle in which texture and sauce adhesion property when being cooked are highly balanced.

In addition, it is preferable that the first and second grooves 3 and 4 are alternately arranged along the circumferential direction of the outer periphery of the noodle string at a number ratio of the second grooves 4 to the first grooves 3 in a range of "1 to 3." For instance, as per the grooved noodle 1 of the embodiment illustrated in FIGS. 1 and 2, the first and second grooves 3 and 4 may be alternately arranged on a one-by-one basis, i.e., at a number ratio of the second grooves 4 to the first grooves 3 of "1." Alternatively, one first groove 3 and two second grooves 4 may be repeatedly arranged, i.e., at a number ratio of the second grooves 4 to the first grooves 3 of "2." Furthermore, the arrangement at the number ratio of "1" and the arrangement at the number ratio of "2" may be sequentially repeated along the circumferential direction of the outer periphery of the noodle string.

Between the adjacent grooves (regardless of whether they are the first grooves 3 or the second grooves 4), the surface S of the noodle string that constitutes part of the configuration M is preferably exposed in a width of 0.3 to 1 mm.

Preferably, the noodle has two to five first grooves 3 and two to five second grooves 4, and the first and second grooves 3 and 4 are alternately arranged at a number ratio of the second grooves 4 to the first grooves 3 of "1." By adopting the foregoing arrangement, the first grooves 3 being deep and the second grooves 4 being shallow are alternately arranged with good balance, whereby the grooved noodle 1 can be efficiently cooked in a short time while a certain number of the first recessed portions and the second recessed portions formed after the cooking can be ensured, improving the sauce adhesion property.

In the grooved noodle of the invention, while the first grooves 3 and the second grooves 4 may be formed in any order or any positional relationship in the surface S of the noodle string, it is preferable that adjacent grooves (regardless of whether they are the first grooves 3 or the second grooves 4) are not in contact with each other but have the surface S of the noodle string exposed therebetween. This is because, particularly, if the surface S of the noodle string is not arranged around the first groove 3, the first groove 3 would likely be closed on the opening portion 3A side earlier than at the bottom portion 31 in the process of cooking the grooved noodle 1, and therefore an empty portion is formed inside the first groove 3, hindering formation of the first recessed portion as a trace of the first groove 3, or causing other problems.

The grooved noodle of the invention can be produced by appropriately adopting a conventional production method. The grooved noodle of the invention can be cooked in a short time compared to noodles having no grooves, and this effect is particularly significant in pasta among noodles, since pasta requires a longer cooking time than other types of noodles.

Below, a production method of the grooved noodle of the invention is described in accordance with the production method of pasta.

The grooved noodle of the invention can be produced by kneading raw material powder as a raw material to form a dough, and forming the dough into a shape of the grooved noodle of the invention. As the main ingredient of the raw material powder, one kind of wheat flour derived from durum wheat or common wheat may be used alone, or plural kinds of wheat flours may be mixed for use. For this wheat flour, for example, semolina may be used. For a raw material of the grooved noodle, an ingredient commonly used as a raw material of noodles may be mixed in addition to wheat flour, and examples of the ingredient include: grain flours other than wheat flours; starches; sugars; salt; seasonings; and thickeners.

Kneading water is added to the raw material flour, followed by kneading, whereby a dough is produced. As the kneading water, various types of waters which may be used for producing a conventional noodle are applicable; fresh water, acidic water, alkaline water, Kansui (lye water) and the like can be appropriately used. Also for the amount of the kneading water, an amount which may be adopted in producing a conventional noodle is applicable and is generally 20 to 30 parts by mass with respect to 100 parts by mass of the raw material flour.

The produced dough is, for instance, extruded from a die provided with through holes by means of a high-pressure extruder to be shaped into the noodle string of the grooved noodle. The noodle string (raw noodle string) shaped as above generally contains 22 to 30% of water and is soft. The raw noodle string as above can be directly cooked and eaten, or, alternatively, frozen or cooled to be stored and cooked within a preservation period. Meanwhile, to improve handleability and preservability, the noodle is preferably dried to reduce its water content to 14% or lower.

The noodle string can be dried by an ordinary method, and one adoptable method is, for example, a method in which a plurality of noodle strings before being dried are placed at spaced intervals so as not to adhere to one another and dried in a constant temperature room with conditioned humidity. Typical drying conditions are, approximately, 18 to 28 hours at temperature of 40°C to 60°C, 8 to 11 hours at temperature of 60°C to 84°C, or 2 to 5 hours at temperature of 84°C or higher, for example.

The grooved noodle of the invention turns to a cooked noodle by being cooked and thereby becomes eatable. The method for cooking the grooved noodle is not particularly limited, and a boiled noodle having excellent texture can be obtained in a short time by, for example, putting the grooved noodle in a sufficient amount of boiling water and boiling the grooved noodle.

### EXAMPLES

The invention is further described below in detail by means of examples, but the present invention should not be construed as being limited to those examples.

### [Example 1]

To 100 parts by mass of durum semolina, 26 parts by mass of water was incorporated, and the mixture was kneaded to produce a dough. Next, a die provided with through holes corresponding to the shape of the grooved noodle 1 (diameter D of configuration M = 1.9 mm) shown in FIG. 1 was attached to a pasta production machine, and the kneaded dough was extruded under a reduced pressure of -600 mmHg, whereby a raw noodle string was formed.

The raw noodle string was then dried by an ordinary method, and a dried spaghetti noodle having a length of 22 cm was produced.

In the grooved noodle 1, respective parts had the following dimensions:
* Diameter D of configuration M being 1.9 mm;
* Width W1 of opening portion 3A of first groove 3 being 0.4 mm;
* Depth T1 of first groove 3 being 0.5 mm;
* Radius of curvature R of curving portion 33 of first groove 3 being 0.1 mm;
* Angle θ formed by pair of side portions 32 of first groove 3 being 0 degrees;
* Width W2 of opening portion 4A of second groove 4 being 0.25 mm;
* Depth T2 of second groove 4 being 0.04 mm;
* Number of first grooves 3 being four;
* Number of second grooves 4 being four;
* Total number of grooves being eight; and
* Number ratio of first grooves 3 to second grooves 4 being 1.

### [Examples 2 to 7]

Except that the dimensions of respective parts of the grooved noodle 1 were changed to the values shown in Table 1 below, dried spaghetti noodles of Example 2 to 7 were produced in the same manner as in Example 1.

### [Comparative Examples 1 to 2]

Except that the grooved noodle 1 was changed to have only the first grooves 3 and no second grooves 4, dried spaghetti noodle of Comparative Example 1 was produced in the same manner as in Example 1.

Except that the grooved noodle 1 was changed to have only the second grooves 4 and no first grooves 3, the dried spaghetti noodle of Comparative Example 2 was produced in the same manner as in Example 1.

### [Evaluation of Texture]

One hundred grams of dried spaghetti noodles produced in each of Examples 1 to 7 and Comparative Examples 1 to 2 was taken and cooked in a generous quantity of boiling water for 6 minutes. After being cooked, the spaghetti noodles were taken out, and water was drained. Ten trained panelists each ate one spaghetti noodle string and rated texture of the spaghetti noodle according to the evaluation criteria S1 below. It should be noted that the evaluation result in a similar evaluation of texture of a commercial dried spaghetti noodle (diameter 1.6 mm) having a circular cross-sectional shape with no grooves and being cooked for a proper time period was rated to have 5 points.

### <Evaluation Criteria of Texture S1>

5 points: Having sufficient firmness, excellent texture comparable to that of ordinary spaghetti noodles having no grooves
4 points: Having firmness, good texture
3 points: Having slightly hard texture entirely, or having slightly soft texture in vicinity of surface
2 points: Having hard texture entirely, or feeling of shifted grooves in vicinity of surface, poor texture
1 point: Having too hard texture entirely, or uncomfortable, limp feeling with shifted wall portions of groove facing each other in vicinity of surface, very poor texture

### [Evaluation of Sauce Adhesion Property]

One hundred grams of dried spaghetti noodles produced in each of Examples 1 to 7 and Comparative Examples 1 to 2 was taken and cooked in a generous quantity of boiling water for 6 minutes. After being cooked, the spaghetti noodles were taken out with water being drained, and put in a bowl with a diameter of 26 cm. A red sauce ("Aerudake Pasta Sauce Neapolitan" available from Nisshin Foods Inc.) was poured over spaghetti noodles, and they were entirely mixed well. Ten trained panelists each observed ten spaghetti noodle strings and rated sauce adhesion property according to the evaluation criteria S2 below. It should be noted that the evaluation result in a similar evaluation of sauce adhesion property of a commercial dried spaghetti noodle (diameter 1.6 mm) having a circular cross-sectional shape with no grooves and being cooked for a proper time period was rated to have 3 points.

### <Evaluation Criteria of Sauce Adhesion Property S2>

5 points: Sufficient amount of sauce being evenly and entirely adhered to noodle strings, and sauce not dripping from lifted noodle strings, excellent adhesion property
4 points: Sauce being entirely adhered to noodle strings and hardly dripping from lifted noodle strings, good adhesion property
3 points: Sauce being entirely adhered to noodle strings but slightly dripping from lifted noodle strings
2 points: Sauce being entirely but unevenly adhered to noodle strings and dripping from lifted noodle strings, poor adhesion property
1 point: Sauce being partly adhered to noodle strings and dripping largely from lifted noodle strings, very poor adhesion property

Table 1 shows the average values of the evaluation results of texture by ten panelists and the average values of the evaluation results of sauce adhesion property by ten panelists.

### [Table 1]

**Table 1**

| | EX 1 | EX 2 | EX 3 | EX 4 | EX 5 | EX 6 | EX 7 | CE 1 | CE 2 |
|---|---|---|---|---|---|---|---|---|---|
| D(mm) | 1.9 | 1.9 | 1.9 | 1.9 | 1.9 | 1.9 | 1.9 | 1.9 | 1.9 |
| W 1 (mm) | 0.4 | 0.4 | 0.4 | 0.3 | 0.3 | 0.3 | 0.3 | 0.4 | - |
| T1 (mm) | 0.5 | 0.5 | 0.5 | 0.5 | 0.5 | 0.5 | 0.5 | 0.5 | - |
| R(mm) | 0.1 | 0.1 | 0.1 | 0.1 | 0.1 | 0.1 | 0.1 | 0.1 | - |
| *θ* (degree) | 0 | 0 | 0 | 0 | 0 | 0 | 0 | 0 | - |
| W2(mm) | 0.25 | 0.25 | 0.25 | 0.2 | 0.2 | 0.2 | 0.2 | - | 0.25 |
| T2(mm) | 0.04 | 0.04 | 0.04 | 0.04 | 0.04 | 0.04 | 0.04 | - | 0.04 |
| Number of first grooves | 4 | 2 | 3 | 4 | 5 | 5 | 6 | 8 | - |
| Number of second grooves | 4 | 2 | 6 | 8 | 5 | 10 | 12 | - | 16 |
| Total number of grooves | 8 | 4 | 9 | 12 | 10 | 15 | 18 | 8 | 16 |
| Number ratio of grooves | 1 | 1 | 2 | 2 | 1 | 2 | 2 | - | - |
| Evaluation of texture | 4.3 | 3.5 | 3.8 | 4.2 | 4 | 3.7 | 3.3 | 2.1 | 1.4 |
| Evaluation of sauce adhesion property | 4.3 | 3.4 | 4 | 4.4 | 4.5 | 4.3 | 3.9 | 3.2 | 2.5 |

| | | | | | | | | | |
|---|---|---|---|---|---|---|---|---|---|
| EX: Example CE: Comparative Example | | | | | | | | | |

Of the dried spaghetti noodles having the first grooves 3 and the second grooves 4 with appropriate dimensions in Examples 1 to 7, the evaluation results of texture were all 3.3 points or higher, and the evaluation results of the sauce adhesion property were 3.4 points or higher; it was shown that both the texture and the sauce adhesion property in these examples were basically good.

Of the dried spaghetti noodles having either the first grooves 3 or the second grooves 4 in Comparative Examples 1 or 2, on the other hand, the evaluation results of texture were 2.1 points or lower, showing poor texture, and the evaluation results of the sauce adhesion property were 3.2 points or lower, showing occurrence of uneven sauce adhesion and sauce dripping.

### [Examples 8 to 11, Comparative Examples 3 to 6]

Except that the width W1 of the opening portion 3A of the first groove 3 and the depth T1 of the first groove 3 were changed to the values shown in Table 2 below, dried spaghetti noodles of Examples 8 to 11 and Comparative Examples 3 to 6 were produced in the same manner as in Example 1. The dried spaghetti noodles of Examples 8 to 11 and Comparative Examples 3 to 6 were evaluated for texture and sauce adhesion property in the same manner as in Example 1. Table 2 shows the average values of the evaluation results of texture by ten panelists and the average values of the evaluation results of sauce adhesion property by ten panelists.

### [Table 2]

**Table 2**

| | CE 3 | EX 8 | EX 9 | CE 4 | CE 5 | EX 10 | EX 11 | CE 6 |
|---|---|---|---|---|---|---|---|---|
| D(mm) | 1.9 | 1.9 | 1.9 | 1.9 | 1.9 | 1.9 | 1.9 | 1.9 |
| W1 (mm) | 0.2 | 0.3 | 0.5 | 0.6 | 0.4 | 0.4 | 0.4 | 0.4 |
| T1 (mm) | 0.5 | 0.5 | 0.5 | 0.5 | 0.2 | 0.3 | 0.6 | 0.7 |
| R(mm) | 0.1 | 0.1 | 0.1 | 0.1 | 0.1 | 0.1 | 0.1 | 0.1 |
| *θ* (degree) | 0 | 0 | 0 | 0 | 0 | 0 | 0 | 0 |
| W2(mm) | 0.25 | 0.25 | 0.25 | 0.25 | 0.25 | 0.25 | 0.25 | 0.25 |
| T2(mm) | 0.04 | 0.04 | 0.04 | 0.04 | 0.04 | 0.04 | 0.04 | 0.04 |
| Number of first grooves | 4 | 4 | 4 | 4 | 4 | 4 | 4 | 4 |
| Number of second grooves | 4 | 4 | 4 | 4 | 4 | 4 | 4 | 4 |
| Total number of grooves | 8 | 8 | 8 | 8 | 8 | 8 | 8 | 8 |
| Number ratio of grooves | 1 | 1 | 1 | 1 | 1 | 1 | 1 | 1 |
| Evaluation of texture | 2.7 | 4 | 4.1 | 2.9 | 2.5 | 4.1 | 4.1 | 2.9 |
| Evaluation of sauce adhesion property | 3.3 | 4.2 | 4.2 | 3 | 3.4 | 4 | 4.2 | 2.4 |

| | | | | | | | | |
|---|---|---|---|---|---|---|---|---|
| EX: Example CE: Comparative Example | | | | | | | | |

Of the dried spaghetti noodles of Examples 8 to 11 where the width W1 of the opening portion 3A and the depth T1 of the first groove 3 were designed to fall within a range of 0.3 to 0.5 mm and a range of 0.3 to 0.6 mm, respectively, the evaluation results of texture were all 4 points or higher, and the evaluation results of sauce adhesion property were 4 points or higher; it was shown that both the texture and the sauce adhesion property in these examples were good.

Of the dried spaghetti noodles of Comparative Examples 3 and 4 where the width W1 of the opening portion 3A of the first groove 3 was designed to be less than 0.3 mm or more than 0.5 mm, the evaluation results of texture were 2.9 points or lower, and the evaluation results of sauce adhesion property were 3.3 points or lower. Of the dried spaghetti noodles of Comparative Examples 5 and 6 where the depth T1 of the first groove 3 was designed to be less than 0.3 mm or more than 0.6 mm, the evaluation results of texture were 2.9 points or lower, and the evaluation results of sauce adhesion property were 3.4 points or lower. It was shown that the dried spaghetti noodles of Comparative Examples 3 to 6 had insufficient texture and significantly inferior sauce adhesion property compared to the dried spaghetti noodles of Examples 8 to 11.

### [Examples 12 to 15, Comparative Examples 7 to 10]

Except that the width W2 of the opening portion 4A of the second groove 4 and the depth T2 of the second groove 4 were changed to the values shown in Table 3 below, dried spaghetti noodles of Examples 12 to 15 and Comparative Examples 7 to 10 were produced in the same manner as in Example 1. The dried spaghetti noodles of Examples 12 to 15 and Comparative Examples 7 to 10 were evaluated for texture and sauce adhesion property in the same manner as in Example 1. Table 3 shows the average values of the evaluation results of texture by ten panelists and the average values of the evaluation results of sauce adhesion property by ten panelists.

### [Table 3]

**Table 3**

| | CE 7 | EX 12 | EX 13 | CE 8 | CE 9 | EX 14 | EX 15 | CE 10 |
|---|---|---|---|---|---|---|---|---|
| D(mm) | 1.9 | 1.9 | 1.9 | 1.9 | 1.9 | 1.9 | 1.9 | 1.9 |
| W1 (mm) | 0.4 | 0.4 | 0.4 | 0.4 | 0.4 | 0.4 | 0.4 | 0.4 |
| T1 (mm) | 0.5 | 0.5 | 0.5 | 0.5 | 0.5 | 0.5 | 0.5 | 0.5 |
| R(mm) | 0.1 | 0.1 | 0.1 | 0.1 | 0.1 | 0.1 | 0.1 | 0.1 |
| *θ* (degree) | 0 | 0 | 0 | 0 | 0 | 0 | 0 | 0 |
| W2(mm) | 0.1 | 0.15 | 0.35 | 0.4 | 0.25 | 0.25 | 0.25 | 0.25 |
| T2(mm) | 0.04 | 0.04 | 0.04 | 0.04 | 0.025 | 0.03 | 0.05 | 0.055 |
| Number of first grooves | 4 | 4 | 4 | 4 | 4 | 4 | 4 | 4 |
| Number of second grooves | 4 | 4 | 4 | 4 | 4 | 4 | 4 | 4 |
| Total number of grooves | 8 | 8 | 8 | 8 | 8 | 8 | 8 | 8 |
| Number ratio of grooves | 1 | 1 | 1 | 1 | 1 | 1 | 1 | 1 |
| Evaluation of texture | 1.8 | 4.1 | 4.1 | 3.3 | 2.1 | 4.1 | 4.1 | 3.4 |
| Evaluation of sauce adhesion property | 2.9 | 4 | 4.1 | 2.7 | 2.8 | 4 | 4.1 | 2.9 |

| | | | | | | | | |
|---|---|---|---|---|---|---|---|---|
| EX: Example CE: Comparative Example | | | | | | | | |

Of the dried spaghetti noodles of Examples 12 to 15 where the width W2 of the opening portion 4A and the depth T2 of the second groove 4 were designed to fall within a range of 0.15 to 0.35 mm and a range of 0.03 to 0.05 mm, respectively, the evaluation results of texture were all 4 points or higher, and the evaluation results of sauce adhesion property were 4 points or higher; it was shown that both the texture and the sauce adhesion property in these examples were good.

Of the dried spaghetti noodles of Comparative Examples 7 and 8 where the width W2 of the opening portion 4A of the second groove 4 was designed to be less than 0.15 mm or more than 0.35 mm, the evaluation results of texture were 3.3 points or lower, and the evaluation results of sauce adhesion property were 2.9 points or lower. Of the dried spaghetti noodles of Comparative Examples 9 and 10 where the depth T2 of the second groove 4 was designed to be less than 0.03 mm or more than 0.05 mm, the evaluation results of texture were 3.4 points or lower, and the evaluation results of sauce adhesion property were 2.9 points or lower. It was shown that the dried spaghetti noodles of Comparative Examples 7 to 10 had largely inferior sauce adhesion property compared to the dried spaghetti noodles of Examples 12 to 15.

### [Examples 16 to 19, Comparative Examples 11 and 12]

Except that the radius of curvature R of the curving portion 33 of the first groove 3 was changed to the values shown in Table 4 below, dried spaghetti noodles of Examples 16 to 19 and Comparative Examples 11 and 12 were produced in the same manner as in Example 1. The dried spaghetti noodles of Examples 16 to 19 and Comparative Examples 11 and 12 were evaluated for texture and sauce adhesion property in the same manner as in Example 1. Table 4 shows the average values of the evaluation results of texture by ten panelists and the average values of the evaluation results of sauce adhesion property by ten panelists.

### [Table 4]

**Table 4**

| | CE 11 | EX 16 | EX 17 | EX 18 | EX 19 | CE 12 |
|---|---|---|---|---|---|---|
| D(mm) | 1.9 | 1.9 | 1.9 | 1.9 | 1.9 | 1.9 |
| W1(mm) | 0.4 | 0.4 | 0.4 | 0.4 | 0.4 | 0.4 |
| T1 (mm) | 0.5 | 0.5 | 0.5 | 0.5 | 0.5 | 0.5 |
| R(mm) | 0.06 | 0.08 | 0.09 | 0.14 | 0.16 | 0.18 |
| *θ* (degree) | 0 | 0 | 0 | 0 | 0 | 0 |
| W2(mm) | 0.25 | 0.25 | 0.25 | 0.25 | 0.25 | 0.25 |
| T2(mm) | 0.04 | 0.04 | 0.04 | 0.04 | 0.04 | 0.04 |
| Number of first grooves | 4 | 4 | 4 | 4 | 4 | 4 |
| Number of second grooves | 4 | 4 | 4 | 4 | 4 | 4 |
| Total number of grooves | 8 | 8 | 8 | 8 | 8 | 8 |
| Number ratio of | 1 | 1 | 1 | 1 | 1 | 1 |
| Evaluation of texture | 2.7 | 3.9 | 4.2 | 4.1 | 3.8 | 2.8 |
| Evaluation of sauce adhesion property | 2.5 | 3.8 | 4.2 | 4.2 | 4 | 3.4 |

| | | | | | | |
|---|---|---|---|---|---|---|
| EX: Example CE: Comparative Example | | | | | | |

Of the dried spaghetti noodles of Examples 16 to 19 where the radius of curvature R of the curving portion 33 of the first groove 3 was designed to fall within a range of 0.08 to 0.16 mm, the evaluation results of texture were all 3.8 points or higher, and the evaluation results of sauce adhesion property were 3.8 points or higher; it was shown that both the texture and the sauce adhesion property in these examples were good.

Of the dried spaghetti noodles of Comparative Examples 11 and 12 where the radius of curvature R of the curving portion 33 of the first groove 3 was designed to be less than 0.08 mm or more than 0.16 mm, the evaluation results of texture were 2.8 points or lower, and the evaluation results of sauce adhesion property were 3.4 points or lower; it was shown that the dried spaghetti noodles of Comparative Examples 11 and 12 had insufficient texture and inferior sauce adhesion property compared to the dried spaghetti noodles of Examples 16 to 19.

### [Examples 20 to 25, Comparative Example 13]

Except that the angle θ formed by the pair of side portions 32 of the first groove 3 was changed to the values shown in Table 5 below, dried spaghetti noodles of Examples 20 to 25 and Comparative Example 13 were produced in the same manner as in Example 1. The dried spaghetti noodles of Examples 20 to 25 and Comparative Example 13 were evaluated for texture and sauce adhesion property in the same manner as in Example 1. Table 5 shows the average values of the evaluation results of texture by ten panelists and the average values of the evaluation results of sauce adhesion property by ten panelists.

### [Table 5]

**Table 5**

| | CE 13 | EX 20 | EX 21 | EX 22 | EX 23 | EX 24 | EX 25 |
|---|---|---|---|---|---|---|---|
| D(mm) | 1.9 | 1.9 | 1.9 | 1.9 | 1.9 | 1.9 | 1.9 |
| W1 (mm) | 0.4 | 0.4 | 0.4 | 0.4 | 0.4 | 0.4 | 0.4 |
| T1 (mm) | 0.5 | 0.5 | 0.5 | 0.5 | 0.5 | 0.5 | 0.5 |
| R(mm) | 0.1 | 0.1 | 0.1 | 0.1 | 0.1 | 0.1 | 0.1 |
| *θ* (degree) | -2 | 1 | 2 | 6 | 8 | 10 | 12 |
| W2(mm) | 0.25 | 0.25 | 0.25 | 0.25 | 0.25 | 0.25 | 0.25 |
| T2(mm) | 0.04 | 0.04 | 0.04 | 0.04 | 0.04 | 0.04 | 0.04 |
| Number of first grooves | 4 | 4 | 4 | 4 | 4 | 4 | 4 |
| Number of second grooves | 4 | 4 | 4 | 4 | 4 | 4 | 4 |
| Total number of grooves | 8 | 8 | 8 | 8 | 8 | 8 | 8 |
| Number ratio of grooves | 1 | 1 | 1 | 1 | 1 | 1 | 1 |
| Evaluation of texture | 1.9 | 4.4 | 4.6 | 4.5 | 4.4 | 4.3 | 4.2 |
| Evaluation of sauce adhesion property | 2.8 | 4.5 | 4.6 | 4.6 | 4.5 | 4.3 | 4.1 |

| | | | | | | | |
|---|---|---|---|---|---|---|---|
| EX: Example CE: Comparative Example | | | | | | | |

Of the dried spaghetti noodles of Examples 20 to 25 where the angle θ formed by the pair of side portions 32 of the first groove 3 was designed to have a positive value, i.e., the distance between the pair of side portions 32 was designed to gradually decrease from its end on the opening portion 3A side toward the bottom portion 31, the evaluation results of texture were all 4.2 points or higher, and the evaluation results of sauce adhesion property were 4.1 points or higher; it was shown that both the texture and the sauce adhesion property in these examples were good.

Of the dried spaghetti noodle of Comparative Example 13 where the angle θ formed by the pair of side portions 32 of the first groove 3 was designed to have a negative value, i.e., the distance between the pair of side portions 32 was designed to gradually increase from its end on the opening portion 3A side toward the bottom portion 31, the evaluation result of texture was 1.9 points, and the evaluation result of sauce adhesion property was 2.8 point; it was shown that the dried spaghetti noodle of Comparative Example 13 had poor texture and largely inferior sauce adhesion property compared to the dried spaghetti noodles of Examples 20 to 25, causing uneven sauce adhesion and sauce dripping.

### REFERENCE SIGNS LIST

1 grooved noodle, 2 grooves, 3 first groove, 4 second groove, 3A, 4A opening portion, 31 bottom portion, 32 side portion, 33 curving portion, L noodle string direction, M configuration, C center portion, T1, T2 depth, W1, W2 width, S surface of noodle string, R radius of curvature, P1, P2 connection point

## Claims

1. A grooved noodle having a plurality of grooves formed along a noodle string direction,
wherein a cross section of a noodle string has a configuration of circular shape or polygonal shape having an area of 1 to 4 mm²,
each of the plurality of grooves has a cross sectional shape extending from a surface of the noodle string toward a center portion of the noodle string in a radial direction with a width being constant or gradually decreasing in a cross section of the noodle string,
the plurality of grooves include a first groove having a width of 0.3 to 0.5 mm of an opening portion at the surface of the noodle string and a depth of 0.3 to 0.6 mm in the radial direction and a second groove having a width of 0.15 to 0.35 mm of an opening portion at the surface of the noodle string and a depth of 0.03 to 0.05 mm in the radial direction in a cross section of the noodle string, and
a cross sectional shape of the first groove in a cross section of the noodle string has a pair of side portions facing each other and linearly extending, and a pair of curving portions each having a radius of curvature of 0.08 to 0.16 mm and connecting end portions of the pair of side portions on a noodle string surface side to the surface of the noodle string.

2. The grooved noodle according to claim 1, wherein a value of a total area of the plurality of grooves in a cross section of the noodle string is 10 to 30% of an area of the configuration when it is assumed that the plurality of grooves are not formed.

3. The grooved noodle according to claim 1 or 2, wherein the plurality of grooves include three to five first grooves each being the first groove.

4. The grooved noodle according to any one of claims 1 to 3, wherein the first groove and the second groove are alternately arranged along a circumferential direction of the noodle string.
